# EUROPEAN PATENT SPECIFICATION

(11) **EP 2 097 492 B1**
(45) Date of publication and mention of the grant of the patent: **04.03.2015**
(21) Application number: 07874317.6
(22) Date of filing: 27.11.2007
(51) Int. Cl.: C09D 11/00

(54) **CARBON NANOTUBE INK**
KOHLENSTOFF-NANOROHR-TINTE
ENCRE DE NANOTUBE DE CARBONE

(30) Priority: 27.11.2006 US 867366 P; 26.11.2007 US 945107
(43) Date of publication of application: 09.09.2009
(73) Proprietor: Fujifilm Dimatix, Inc., Lebanon, NH 03766 (US)
(72) Inventor: SUMEREL, Jan, San Jose, California 95128 (US)
(74) Representative: Peterreins, Frank
(86) International application number: PCT/US2007/085637
(87) International publication number: WO 2008/140589

(56) References cited:
- WO-A2-2005/119772
- US-A1- 2003 035 917
- US-A1- 2003 196 570
- US-A1- 2005 224 764
- US-A1- 2006 124 028
- US-A1- 2006 159 838

## Description

### TECHNICAL FIELD

This invention relates to depositing carbon nanoparticles.

### BACKGROUND

The field of carbon nanotubes (CNT) research has grown dramatically every year since 1991 when the structures of carbon nanotubes (CNTs) were described by electron microscopy. The great interest in carbon nanotubes is derived from their small nanometer length scale dimensions and remarkable chemical and physical properties. Because of these unique properties CNTs have many potential applications, but their applications are limited by methods of forming and applying CNTs. A variety of new synthesis methodologies have been developed in recent years. In addition, many characterization techniques have also facilitated the analysis of their structure at the atomic level, and as the direct result, the structural-function relationship of CNTs is becoming clear. There is data supporting the unique mechanical and physical properties of CNTs and a variety of real near-term applications have been demonstrated from these studies. These applications include, but are not limited to, scanning probe tips, field emitters for instrumentation and displays, nanoelectrodes for sensor applications, and efficient heat conductors.

Based on their microstructures, CNTs can be differentiated into two types: single-walled and multi-walled CNTs. A single-walled CNT (SWCNT) is a rolled-up tubular shell of graphene sheet, which is made up of benzene-type hexagonal rings of carbon atoms. A multi-walled CNT (MWCNT) is a rolled-up stack of graphene sheets in concentric cylinders, with interlayer thickness (0.34 nm) equal to that of the graphite. As the field of research for CNTs is developing, challenges in bringing CNT applications out of the laboratory remain in the manufacturing processing. Methods for large-scale use and highly precise deposition of a controlled amount of CNTs are desirable.

U.S. Pat. No. 6,758,891 describes a carbon-containing material with organic groups, which is obtainable by reaction of a carbon-containing compound, such as carbon black, graphite powder. graphite fibers, carbon fibers, carbon fibrils, carbon nanotubes, carbon fabrics, glass-like carbon products and active carbon, with a triazole compound. In that disclosure it is suggested that the carbon-containing material with organic groups may be used as a pigment in printing inks, inks and ink jet inks.

The use of carbon nanotubes to make conductive films for electronic applications is known. For example, US2003/0122111 describes an electrically conductive film containing a plurality of single-walled carbon nanotubes. US2004/0099438 describes a two-step method for patterning a carbon nanotube film comprising applying a solution of carbon nanotubes to a substrate and impregnating the carbon nanotube film with a binder or photoresist. US 2004/10102044 describes a method for incorporating low work function metals and their salts into carbon nanotubes for use as field emission devices. U.S. Pat. No. 6,330,939 describes an ink comprising carbon nanotubes that is used to determine the authenticity of documents.

US 2006/0124028 A1 describes ink jet ink compositions comprising chemically functionalized or physically modified, singly dispersed carbon nanotubes. These nanotubes have a length suitable for ink jet printing.

### SUMMARY

The present invention is defined by independent claim 1 disclosing a jetting solution and by independent claim 9 disclosing a method of forming a carbon nanotube layer. The dependent claims depict preferred embodiments of the invention.

In some embodiments, ink jet solutions are described that have an organic component, a defoamer component and carbon nanotubes. The solution comprises less than 0.008% of the defoamer component.

In some embodiments, a method of forming a carbon nanotube layer is described. An ink jet solution is jetted onto a substrate. The fluid is then evaporated from the solution to form the carbon nanotube layer.

Embodiments of the solutions and methods may include one or more of the following features. The solution may further comprise water, wherein the water comprises less than 30% of the solution. The organic component may be an alcohol, such as a diol, e.g., propanediol, or a C1 to a C6 alcohol. The solution may comprise between 60-80% of the organic component. The solution may comprise less than 0.005% of the defoamer component. The defoamer component may comprise nonionic compounds. The defoamer component may include one or more diol alcohols, such as 2, 4, 7, 9-tetramethyl-5-decyne-4,7-diol, and the defoamer component is a different compound than the organic component. The solution can further comprise a compound having a viscosity of at least 1000 mPa*s at 293K. The solution may comprise less than 5% of the carbon nanotubes or less than 2% of the carbon nanotubes or between 0.1%-5% of the carbon nanotubes. The solution can have a surface tension of between 20-40 mN/m. The solution can have a viscosity of between 1-5 mPa*s at 17.7°C. The solution can be substantially free of polymers, binders, resins and adhesives. The solution can be jetted into droplets having an average diameter of 40 micrometers. The solution can be jetted from a piezoelectric drop on demand inkjet printer.

Advantages of the solutions and processes described herein may include one or more of the following. Because with inkjet printing small quantities of CNTs are able to be expelled in each droplet, very small quantities of CNTs may be used. Inkjet methods described herein are scalable, and thus are useful in manufacturing as well as laboratory settings. After a CNT film is formed, the substrate with the CNT film may be subjected to additional processes, including roll to roll manufacturing techniques or adding further printed thin films to an assembly including the CNTs. The CNT films may be used in field emission applications, low power X-ray tubes, and in sensors and electronics. Forming a layer of CNTs can achieve substrate strengthening, for example, a strong, light coating of CNTs can be added to a commercial product, such as an automobile exterior. The CNT films can be applied to a wide range of substrates, such as polymers, semiconductors, or metals, or applied adjacent to other layers on a substrate, such as over organic layers or biomolecules. Jetting CNTs onto a substrate can allow for more flexible use of CNTs films, particularly in applications when other forms of CNT formation, such as chemical vapor deposition, are incompatible with the substrate or with other layers of the assembly on which the CNTs are applied. Using very low amounts of defoamer can allow for forming a CNT film that has a low level of contamination once the solution is dried.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG 1 is an electron micrograph of a low density MWCNTs on a silicon wafer.
FIG 2 is an electron dispersive spectroscopy of CNTs on a silicon wafer.

Like reference symbols in the various drawings indicate like elements.

### DETAILED DESCRIPTION

Inkjet printing can be used to form thin films of CNTs. Moreover, ink jet printing can apply the thin films very precisely, and thus can be used to form CNT structures, such as field emitters and nanoelectrodes for sensors and electronics.

Solutions for printing carbon nanotubes include an organic component and a wetting or a defoaming agent, as well as the carbon nanotubes. In addition, water can be a component of the solution. The organic component can be an alcohol, such as ethanol, propanol, for example, isopropanol, propanediol, pentanol or a combination thereof. In some embodiments, the organic component includes a C1 to C6 alcohol. CNTs are organic and hydrophobic and thus weak organic solvents for the solution can make up more than one third of the jetting solution. In embodiments, the organic component comprises at least 50% of the jetting solution, such as between 60% and 80% of the solution, or more than 60%, more than 70% or more than 80% of the solution.

The defoaming agent can be a nonionic compound, such as a diol, for example, 2, 4, 7, 9-tetramethyl-5-decyne-4,7-diol, linear alcohols or non-polar compounds. The defoaming agent can be used in small quantities, that is, quantities less than 0.008% of the weight percent of the jetting solution, such as less than 0.007%, 0.006%, 0.005% or 0.004% of the jetting solution. The defoaming agent can have low polarity. In addition to providing the advantage of reducing foam in the jetting solution, it is theoroized that the defoamer compound wraps around the CNTs and when solution is centrifuged or sonicated, causing the defoamer/CNTs micelles to repel one another. Low concentrations of defoaming agent can keep contamination of the CNTs in the jetted layer low, while properly adjusting the surface tension of the solution. The low levels of defoaming agent can obviate any post processing necessary to remove contaminants.

The solution can also include a component that increases the overall viscosity of the solution. Such components may have a viscosity greater than 1000 mPa*s at 293K, such as glycerol. Glycerol can make up between 2 and 40% of the solution, such as between 5 and 30%, 7 and 25%, 10% and 20% or 12% and 18% of the solution, such as 15% of the solution.

Optionally, if a pigmented layer of CNTs is desired, pigment can be added to the jetting solution. Without pigment, the final layer of CNTs may be transparent to a human observer. Water can make up the balance of the solution, if the solution is not entirely comprised of organics and CNTs. In some embodiments, the jetting solution has less than 30% water, such as less than 20% or less than 10% water.

The surface tension of the jetting solution can be between 10 and 50 mN/m at 22°C, such as between 15 and 40 mN/m, 15 and 35 mN/m or between 28 and 33 mN/m. The viscosity can be between 1 and 10 mPa*s at 17.7°C, such as between 2 and 8 centipoise or 3 mPa*s.

The CNTs in the solution can be multi-walled or single-walled CNTs. The solution can include less than 10%, such as less than 5%, 4%, 3%, 2%, 1%, or 0.5% of the CNTs.

In some embodiments, the CNTs are bonded onto bases of DNA. Bonding the CNTs onto bases of the DNA can align the CNTs according to a helix or double helix configuration. Because of the size of the CNTs in comparison to the DNA bases, only select bases of the DNA may have CNTs bonded thereto. Bonding the CNTs to only one type of base, such as the pyrimidine or the purine bases, may allow for selectively locating the CNTs along the DNA.

The solutions described herein can be jetted using an inkjet printer, such as a DMP-2800 series printer available from FUJIFILM Dimatix, Inc., in Santa Clara, CA. The DMP-2800 is further described in "Fluid Deposition Device", U.S. Application No. 11/457,022, filed July 12, 2006. The DMP-2800 can print ink droplets having a size of 10 picoliters and a diameter of 40 micrometers with a drop on demand piezoelectric printhead having nozzles with an effective diameter of 21.5 micrometers. The components of the jetting solution can be mixed together, such as by vortex mixing and sonication. The solution is then jetted onto a substrate. Once on the substrate, the non-CNT components of the jetting solution can be subsequently driven off, such as by heat or vacuum. A thin CNT film, such as a film having a thickness of less than 40 micrometers, e.g., less than 30 micrometers, 20 micrometers, 10 micrometers or 5 micrometers can be formed.

Optionally, after deposition of the CNTs, a surface bonding process can be performed. The CNTs can be actively manipulated, such as by manipulating the jetting solution or by a self assembly process. For example, a method of orienting the CNTs may include changing the surface energy of the substrate. Alternatively, a patterned hydrophilic or hydrophobic substrate surface can align the CNTs by wicking the jetting solution. Alignment can occur prior to driving off the fluid from the jetting solution.

After a CNT film is formed, the substrate with the CNT film can be subjected to additional processes, including roll to roll manufacturing techniques or adding further printed thin films to an assembly including the CNTs. Non-contact deposition of the CNTs, that is, printing, is an additive process that can be combined with other manufacturing techniques, such as lithography, chemical etching and laser ablation.

Because with inkjet printing small quantities of CNTs are able to be expelled in each droplet, very small quantities of CNTs may be used. Inkjet methods described herein are scalable, and thus are useful in manufacturing as well as laboratory settings. The CNT films may be used in field emission applications, low power X-ray tubes, and in sensors and electronics. Forming a layer of CNTs can achieve substrate strengthening, for example, a strong, light coating of CNTs can be added to a commercial product, such as an automobile exterior. The CNT films can be applied to a wide range of substrates, such as polymers, semiconductors, or metals, or applied adjacent to other layers on a substrate, such as over organic layers or biomolecules. Jetting CNTs onto a substrate can allow for more flexible use of CNT films, particularly in applications when other forms of CNT formation, such as chemical vapor deposition, are incompatible with the substrate or with other layers of the assembly on which the CNTs are applied.

### Example

Jetting fluid was formed using MWCNTs having lengths between 0.5 and 2 micrometers and obtained from Aldrich Chemicals. An emulsion was made using 1% of the MWCNTs, 0.009% Surfynol 104PA from Air Products, Inc., 69% propanediol from Sigma Aldrich and water. The emulsion was mixed for two hours at room temperature by intermittent vortex mixing at high speed. The emulsion had a surface tension of 28.8 mN/m and a viscosity at 17.7°C was 3 mPa*s.

The emulsion was jetted onto a silicon wafer using a DMP-2800 from FUJIFILM Dimatix, Inc. After jetting, the silicon wafer was placed in a vacuum to remove the propanediol.

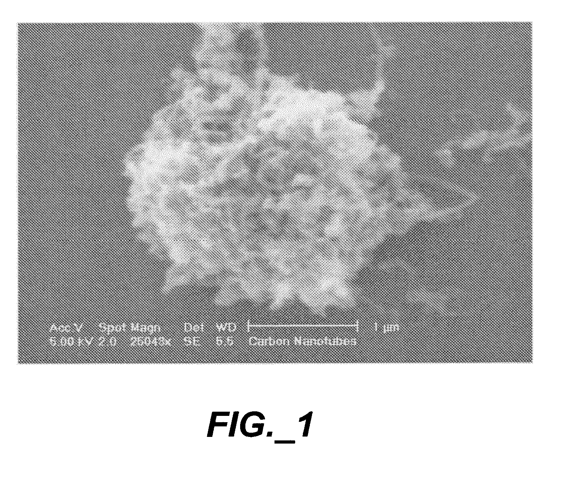

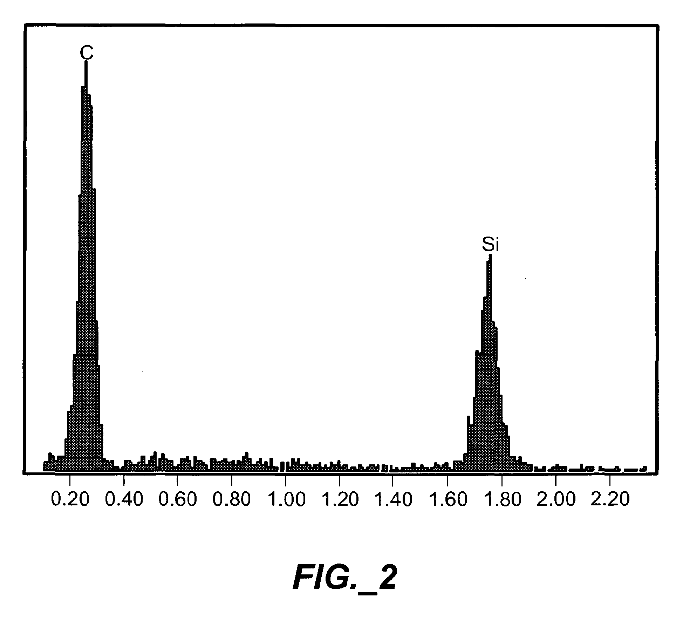

Referring to FIG. 1, an electron micrograph shows the low density MWCNTs on the surface of the silicon wafer. Referring to FIG. 2, an electron dispersive spectroscopy gives relatively pure carbon and a relatively pure silicon signature for the CNTs deposited on the silicon wafer. It is believed that the low concentration of defoaming agent allows for the relatively pure carbon and silicon signatures.

## Claims

1. A jetting solution, comprising:
at least 50% an organic component, wherein the organic component is a C1 to a C6 alcohol;
less than 0.008% of a defoamer component, wherein the defoamer component includes one or more diol alcohols and the defoamer component is a different compound than the organic component;
water; and
carbon nanotubes, wherein the solution comprises less than 5% of the carbon nanotubes.

2. The solution of claim 1, wherein the solution comprises less than 0.005% of the defoamer component.

3. The solution of claim 1, wherein the defoamer component includes 2, 4, 7, 9- tetramethyl-5-decyne-4,7-diol.

4. The solution of claim 1, further comprising a compound having a viscosity of at least 1000 mPa*s at 293K.

5. The solution of claim 1, wherein the solution comprises less than 2% of the carbon nanotubes.

6. The solution of claim 1, wherein the solution has a surface tension of between 20-40 mN/m.

7. The solution of claim 1, wherein the solution has a viscosity of between 1-5 mPa*s at 17.7°C.

8. The solution of claim 1, wherein the solution is substantially free of polymers, binders, resins and adhesives.

9. A method of forming a carbon nanotube layer, comprising: jetting the solution of claim 1 onto a substrate; and evaporating fluid from the solution to form the carbon nanotube layer.

10. The method of claim 9, wherein jetting the solution comprises jetting droplets having an average diameter of 40 micrometers.

11. The method of claim 9, wherein jetting the solution comprises ejecting droplets from a piezoelectric drop on demand inkjet printer.

## Patentansprüche

1. Ein Ausstoß-Lösung umfassend:
mindestens 50% einer organischen Komponente, wobei die organische Komponente ein C1- bis zu einem C6-Alkohol ist;
weniger als 0,008% von einer Antischaummittel-Komponente, wobei die Antischaummittel-Komponente einen oder mehrere Diol-Alkohole umfasst und die Antischaummittel-Komponente eine andere Verbindung als die organische Komponente ist;
Wasser;
und
Kohlenstoff-Nanoröhren, wobei die Lösung weniger als 5% von den Kohlenstoff-Nanoröhren umfasst.

2. Die Lösung nach Anspruch 1, wobei die Lösung weniger als 0.005% der Antischaummittel-Komponente umfasst.

3. Die Lösung nach Anspruch 1, wobei die Antischaummittel-Komponente 2,4,7,9-Tetramethyl-5-decin-4,7-diol umfasst.

4. Die Lösung nach Anspruch 1, weiter umfassend eine Verbindung, die eine Viskosität von mindestens 1000 mPa*s bei 293 K hat.

5. Die Lösung nach Anspruch 1, wobei die Lösung weniger als 2% der Kohlenstoff-Nanoröhren umfasst.

6. Die Lösung nach Anspruch 1, wobei die Lösung eine Oberflächenspannung von zwischen 20-40 mN/m hat.

7. Die Lösung nach Anspruch 1, wobei die Lösung eine Viskosität von zwischen 1-5 mPa*s bei 17.7°C hat.

8. Die Lösung nach Anspruch 1, wobei die Lösung im Wesentlichen frei Polymeren, Bindemitteln, Harzen und Klebstoffen ist.

9. Ein Verfahren zum Bilden einer Kohlenstoff-Nanoröhren-Schicht, umfassend:
Ausstoßen der Lösung nach Anspruch 1 auf ein Substrat; und
Verdampfen von Fluid von der Lösung, um die Kohlenstoff-Nanoröhren-Schicht zu bilden.

10. Das Verfahren nach Anspruch 9, wobei Ausstoßen der Lösung Ausstoßen von Tröpfchen umfasst, die einen durchschnittlichen Durchmesser von 40 Mikrometern haben.

11. Das Verfahren nach Anspruch 9, wobei Ausstoßen der Lösung Auswerfen von Tröpfchen von einem piezoelektrischen Drop-on-Demand Tintenstrahldrucker umfasst.

## Revendications

1. Solution pour jet, comprenant :
au moins 50 % d'un composant organique, le composant organique étant un alcool en C1 à C6 ;
moins de 0,008 % d'un composant antimousse, le composant antimousse comportant un ou plusieurs diols et le composant antimousse étant un composé différent du composant organique ;
de l'eau ; et
des nanotubes de carbone, la solution comprenant moins de 5 % des nanotubes de carbone.

2. Solution selon la revendication 1, la solution comprenant moins de 0,005 % du composant antimousse.

3. Solution selon la revendication 1, dans laquelle le composant antimousse comporte du 2,4,7,9-tétraméthyl-5-décyne-4,7-diol.

4. Solution selon la revendication 1, comprenant en outre un composé ayant une viscosité d'au moins 1000 mPa*s à 293 K.

5. Solution selon la revendication 1, la solution comprenant moins de 2 % des nanotubes de carbone.

6. Solution selon la revendication 1, la solution ayant une tension superficielle entre 20 et 40 mN/m.

7. Solution selon la revendication 1, la solution ayant une viscosité entre 1 et 5 mPa*s à 17,7 °C.

8. Solution selon la revendication 1, la solution étant pratiquement exempte de polymères, liants, résines et adhésifs.

9. Procédé de formation d'une couche de nanotubes de carbone, comprenant : le jet de la solution de la revendication 1 sur un substrat ; et l'évaporation du liquide de la solution pour former la couche de nanotubes de carbone.

10. Procédé selon la revendication 9, dans lequel le jet de la solution comprend le jet de gouttelettes ayant un diamètre moyen de 40 micromètres.

11. Procédé selon la revendication 9, dans lequel le jet de la solution comprend l'éjection de gouttelettes depuis une imprimante à jet d'encre à goutte à la demande piézoélectrique.
